# EUROPEAN PATENT SPECIFICATION

(11) **EP 3 369 798 B1**
(45) Date of publication and mention of the grant of the patent: **28.08.2019**
(21) Application number: 18460006.2
(22) Date of filing: 31.01.2018
(51) Int. Cl.: C10B 53/07, C10B 47/30, C10B 21/20

(54) **METHOD OF TYRE RECYCLING**
VERFAHREN ZUM REIFENRECYCLING
PROCÉDÉ DE RECYCLAGE DE PNEUMATIQUES

(30) Priority: 02.03.2017 PL 42070417
(43) Date of publication of application: 05.09.2018
(73) Proprietor: Gulba, Miroslaw, 65-736 Zielona Gora (PL); Przerwa, Jerzy, 86-300 Grudziadz (PL)
(72) Inventor: Gulba, Miroslaw, 65-736 Zielona Gora (PL); Przerwa, Jerzy, 86-300 Grudziadz (PL)
(74) Representative: Piatkowska, Elzbieta

(56) References cited:
- US-A1- 2005 240 068
- US-A1- 2017 029 707
- US-B1- 6 221 329

## Description

The object of the invention includes a method of tyre recycling using thermolysis, during which temperature causes bonds of chemical compounds to rupture. This invention may be used at sites disposing of rubber waste, vehicle disassembly stations, waste disposal sites and other storage sites of waste rubber and/or vehicle tyres.

Patent disclosure PL 104483 presents a tunnel-type furnace for pyrolysis and a disclosure of a pyrolysis process. The tunnel furnace can host periodically moving carriages containing tyres. This furnace has three separate technological areas A, B and C with heating and cooling gas circuits. The A zone is used for initial cooling of tyres directly using flue gases obtained from gas fuel or oil combustion in the pre-heater combustion chamber. The B zone is used for degassing and pyrolysis of tyres, with circulating vapours of evaporating oils heated by flue gas in a heater used as a heating medium. The C zone is used for cooling of degassed tyres using gas obtained from the pre-heating zone A. Side walls of the tunnel furnace are provided with funnel-type inlets and perforated walls, some of which are directly connected to the outlet of the combustion chamber on one side, whilst some are connected via a heater. Excessive flue gas circulating in the pre-heating system A and in the cooling zone C is discharged to the atmosphere through a chimney. The pyrolysis process as disclosed in the PL 104483 document is characterised in that the pre-heating zone is directly heated using flue gas partially obtained during combustion of gaseous or liquid fuel and partially using hot gases collected from the cooling zone, whilst the pyrolysis zone is heated using circulated vapour generated in this zone and heated flue gas.

Patent disclosure PL217003 presents a method of vehicle tyre recycling, characterised according to the invention in that vehicle tyres are introduced into a hermetically closed device from a feeder, through a hydraulic lock, and the tyres are subsequently heated in the pyrolytic section of this hermetic device using a membrane-type heat exchanger, up to 450-600 °C over a time which does not exceed 120-150 minutes. Heated vehicle tyres are moved to the charcoal activation zone, where they are heated using a plate-type heat exchanger up to 700-850°C over a time which does not exceed 120-150 minutes. Subsequently, charred vehicle tyres are transported using mechanical transporters to the cooling section and cooled using water and air coolers, followed by crushing using mechanical crushing devices and the obtained charcoal is then separated from metal elements. The obtained, activated charcoal is transported to activated charcoal containers, preferably through fan-type valves. Metal elements are discharged through a spiral transporter to metal waste containers. Gaseous hydrocarbons obtained during pyrolysis are cooled using first water coolers installed inside the hermetic device. Obtained, liquid hydrocarbons in the form of oil fractions are discharged to oil tanks through the hydraulic lock. Uncondensed, gaseous hydrocarbons are directed to the furnace as a combustible gas through the hydraulic lock, using a compressor, and obtained hot flue gas is first directed to the plate-type heat exchanger and subsequently - to the membrane-type heat exchanger.

Patent disclosure PL 210900 presents a method and a system of devices for continuous processing of organic waste, in particular of contaminated plastic waste and used vehicle tyres. This method is characterised in that decomposition reactions are performed catalytically, in at least one reactor, in a liquefied batch layer formed on heated surfaces of cylindrical melting bottoms. The batch is introduced horizontally and at an angle, along a batch feeding guide, over the surface of heated, cylindrical melting bottoms. Then, the batch is moved in the transverse direction to the heated surfaces of cylindrical melting bottoms using pressure-raking belts. The device system according to PL 210900 includes at least two reactors combined with a common contamination removing device and with a common system collecting and separating fractions of gaseous, products. A separate loading device is provided as an automatic batch feeding press, introducing the batch horizontally and at an angle, along a batch feeding guide, over the surface of heated, cylindrical melting bottoms. The batch transporting device is provided as at least one set of drums sweeping the transported batch transversely to the surface of cylindrical melting bottoms using pressure-raking fingers, and the contamination discharge system includes at least one spiral transporter.

Patent disclosure PL 193418 presents a method and an installation for processing of vulcanised rubber waste. According to this method, rubber waste is cut into pieces, which are subsequently processed using pure, molten base. Pieces are processed in temperatures causing decomposition of vulcanised rubber waste in the presence of vigorously reacting base into solid fragments separated from the polymeric mixture. Molten base is also separated from the separated solid fragments, the separated solid fragments are neutralised, returned or re-used. The installation according to the PL 193418 disclosure forms a completely closed system, thus avoiding the problem air pollution. The system includes a reactor provided as a furnace, to which vulcanised rubber waste cut into coarse pieces is introduced together with pure, molten base providing a vigorously reacting medium. This reactor utilises temperature conditions resulting in decomposition of vulcanised rubber waste into solid fragments from the polymeric mixture, separated in and by the vigorously reacting medium. The installation also includes a separator enabling separation of the molten base from separated solid fragments, a neutralising device fed with a neutralising agent from a neutralising agent feeding source and a device sorting neutralised, separated solid fragments.

Patent disclosure PL 218771 discloses a method and an installation for tyre recycling. According to this method, tyres cut into pieces are placed in an autoclave and heated, whilst the evolving gas is discharged into a gas tank. Once tyres cut into several pieces are introduced through the feeding inlet to a closed autoclave, the autoclave is heated for at least 2 h, such that temperature inside the autoclave increases at a constant rate not higher than 90°C/h and reaches a value in the range of 150°C to 180°C. The autoclave is then heated for at least another 2 h, such that temperature inside the autoclave increases linearly at a constant rate, not higher than 90°C/h and reaches a value in the range of 350°C to 380°C, after which the heating is stopped and autoclave interior is cooled to a temperature not higher than 40°C. The steam and gas mixture forming in the autoclave is sent through the main pipe to the rectification column containing at least for sections located over the bottom section, which separate the steam and gas mixture received from the autoclave into water, liquid fractions and pyrolytic gas. The pyrolytic gas is transferred to a tank gas through a pipe, where it is filtrated in a pre-filter and the final cleaning filter, and a part of this pyrolytic gas is used to heat the autoclave.

Patent disclosure RU 2062284 presents a processing method for combustible waste in the form of waste tyres and similar rubber waste, according to which pyrolysis of the polymer component of tyres yields hydrocarbon products and flammable gas. A layer of tyre fragments is loaded into a reactor, in which subsequent layers are present in an stream of oxidising gasifying agent, for example air, moving in the opposite direction and through which the layer of loaded tyre fragments is moving. These include the following layers: the pre-heating layer, the pyrolysis layer, the coking layer, the combustion layer and the cooling layer. Solid residues are collected from the reactor once the layer passes through all zones. The final product is discharged from the reactor as aerosol containing vapours and small droplets of pyrolytic tar, as well as a flammable gas. Tyres are cut before processing into piece with the length in the range between 25 and 300 mm. Pieces of solid, non-flammable and non-melting materials are added to the tyre pieces layer. The mass ratio of the gasifying agent to the amount of the layer loaded into the reactor and the gasifying agent feeding rate are selected such that temperature in the combustion zone is between 800°C and 1700°C, and the final product temperature does not exceed 300°C at the outlet.

Patent disclosure WO 02/38658 presents a method and a device for indirect and direct interaction of melting rubber waste and plastics, in particular of granulates obtained from waste tyres. The waste is loaded at the top of a vertical pyrolytic reactor, in which the waste is transported to the bottom of the reactor whilst being heated in a temperature range between 400°C and 950°C such that pyrolytic reactions occur inside the reactor. Waste placed inside the reactor is heated indirectly, by heating the external surface of the reactor and directly, using gas introduced inside the reactor. The device executing this method is provided with a reactor, a hot flue gas generator, heat exchangers, a fan returning raw gas to the circulation, a grain membrane filter and a water-cooled sprinkler, which separates the gas and vapour mixture into gas and liquid fractions. Patent disclosure US 2017/029707 A1 teaches a process for pyrolysing tyres with well defined temperature and time programs followed by a separation drum and each zone having burners for heating the drums, which may be rotary.

The disadvantage of the known tyre recycling methods lies in the necessity to heat the tyres up to a relatively high temperature, which requires a lot of energy, as well as in the necessary use of various additional solvents facilitating the process of obtaining liquid fractions and of the pyrolytic gas. These known methods do not allow the recycling process to be run continuously because of the need to cool down the tyre container before the tyres are loaded again.

A method of tyre recycling avoiding the aforementioned disadvantages is characterised in that the recycling process takes place in an installation containing three identical units: the first unit, the second unit and the third unit, wherein each of the units is located in a separate container structure and includes a hearth, in which a rotary reactor containing recycled tyres is placed, a horizontal rectification column provided with at least three sections of the fraction tank, and with a gas tank with filters. Once the recycled tyres and possible rubber waste with a minimum mass of 1,000 kg are placed in the tyre containers of rotary reactors and rotary reactors are placed in hearths of individual units, gas is fed from a cylinder to burners of the hearth located in the first unit, and the gas is ignited. Temperature inside the rotary reactor in the hearth of the first unit should increase over 3 h with a constant temperature increase rate not higher than 90°C/h and reach a value in the range of 250°C to 270°C. Over the next 1,5 h this temperature should increase at a steady rate, not exceeding 90°C/h and reach a value in the range of 350°C to 380°C. The rotary reactor located in the hearth of the first unit is then heated such that it maintains temperature of 350°C to 380°C until the flow sensor located in the horizontal rectification column in the first unit no longer indicates that liquid fraction flow is present. Next, the gas valve used to feed gas from the cylinder is closed, the rotary reactor is removed from the hearth of the first unit and in which the tyres were rectified, and another rotary reactor loaded with tyres is placed in this hearth of the first unit. 3 h after the process was initiated in the hearth of the first unit, gas received from the first unit and leaving burners of the hearth located in the second unit is ignited. 3 h after the combustion was initiated in the hearth of the second unit, gas received from the second unit and leaving burners of the hearth located in the third unit is ignited. Temperature inside the rotary reactor located in the hearth of the corresponding first or second unit should increase over 3 h after gas is ignited in this unit, with a constant temperature increase rate, not higher than 90°C/h and reach a value in the range of 250°C to 270°C. Over the next 1,5 h this temperature should increase at a steady rate, not exceeding 90°C/h and reach a value in the range of 350°C to 380°C. The rotary reactor located in the hearth of the corresponding first or second unit is then heated such that it maintains temperature of 350°C to 380°C until the flow sensor located in the horizontal rectification column in the corresponding unit no longer indicates that liquid fraction flow is present. The rotary reactor in which tyres have been rectified is then removed and another rotary reactor loaded with tyres is then placed in the hearth of the corresponding first or second unit. Tyre recycling is repeated in corresponding units, wherein gas leaving burners of the hearth located in the corresponding unit is ignited from the flame of the previously fed gas.

If recycled tyres and potential rubber waste with a total mass of 1,000 kg is placed in tyre containers of rotary reactors and the reactors are placed in hearths of the respective units, the rotary reactor in which tyres have been rectified is removed from the hearth of the corresponding unit after 7.5 h since combustion started, and another rotary reactor loaded with tyres is then placed in the hearth of the corresponding unit, wherein time intended for replacement of the rotary reactor is 0.5 h. This means that recycling of tyres placed in the rotary reactor of the corresponding unit takes place every 8 h.

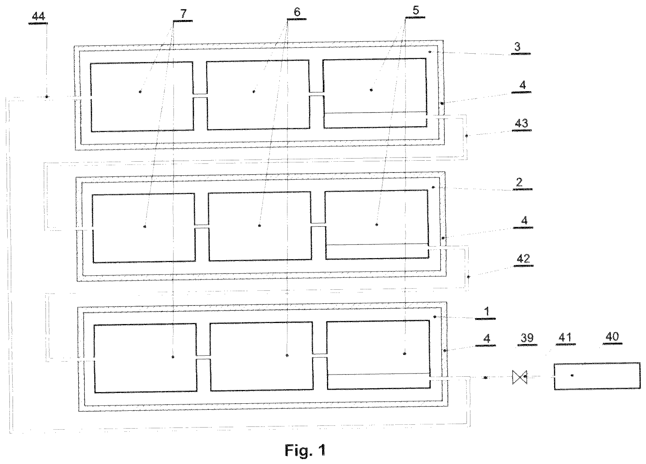

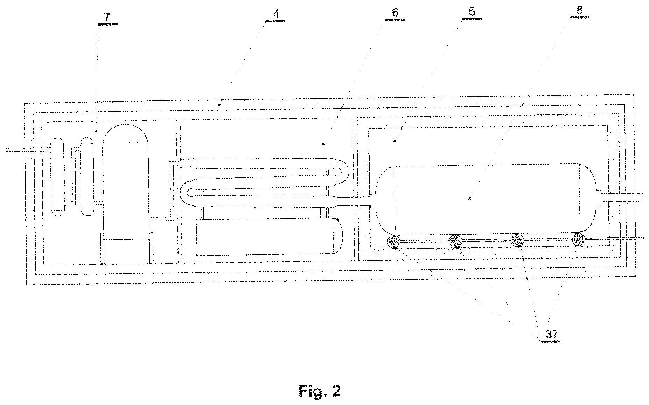

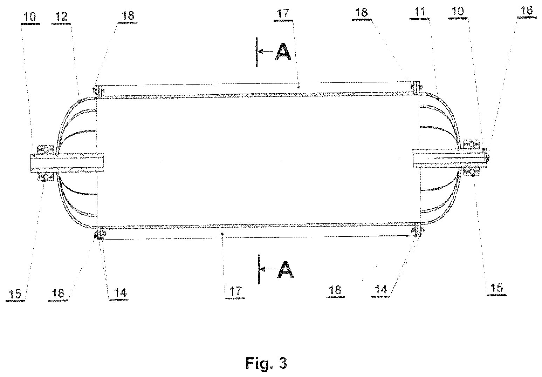

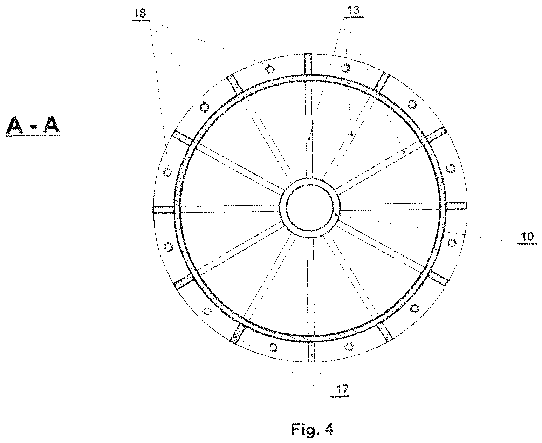

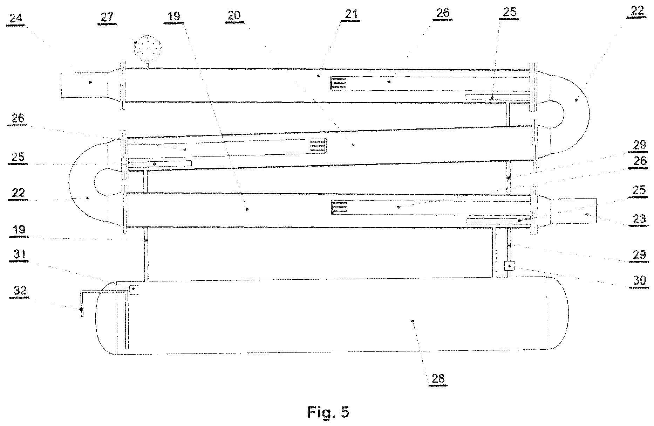

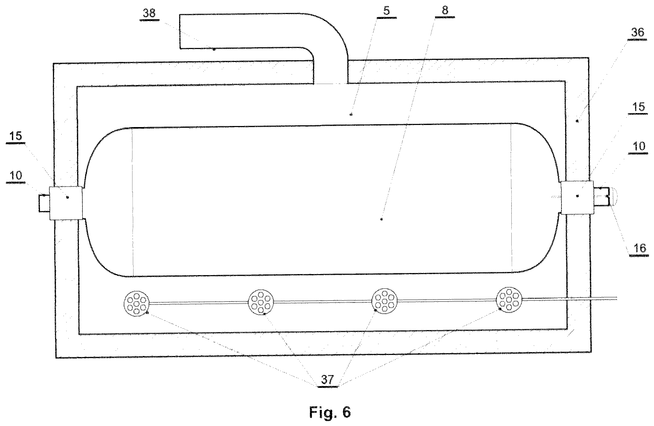

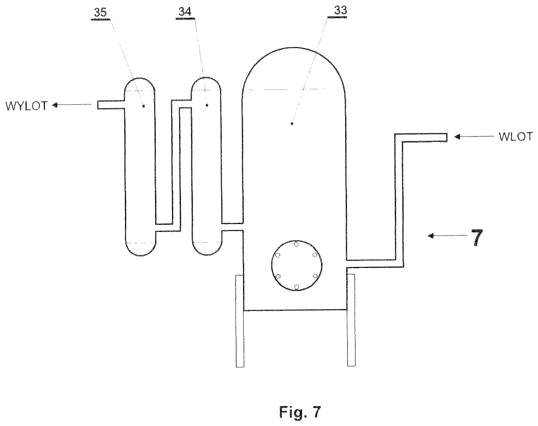

The method according to the invention shall now be explained according to an embodiment of the invention using a drawing, in which Fig. 1 presents a diagram of the tyre recycling installation, Fig. 2 presents a unit in a container structure, Fig. 3 presents a longitudinal cross-section of a rotary reactor, Fig. 4 presents a transverse cross-section a-a of the rotary reactor according to Fig. 3, Fig. 5 presents a horizontal rectification column, Fig. 6 presents a hearth with a rotary reactor placed therein, Fig. 7 presents a gas tank with filters.

The recycling installation which executes the method according to the invention contains three identical units: the first unit 1, the second unit 2, the third unit 3, with each of the units placed inside a separate container structure 4 of the W20 type. Each of the units 1, 2, 3 contains a hearth 5, a horizontal rectification column 6, a gas tank with filters 7.

The rotary reactor 8 placed inside the hearth 5 contains a tyre container 9 and two bearing pipes 10, with one of the pipes located in an opened loading bottom 11, and the other in the fixed bottom 12. Both bottoms 11, 12 are provided with profiled blades 13 on the inside, providing reinforcement of the structure of bottoms 11, 12 and with flange 14 on the outside.

A bearing 15 is placed on each of the bearing pipes 10 and enables slow rotation of the rotary reactor 8 through action of a motor and a gear (not presented on the figure). The rotary reactor rotates once every single minute in this example embodiment of the invention. A thermometer 16 is installed inside the bearing pipe 10 placed in the opened loading bottom 11, which measures temperature inside the tyre container 9. Vapours and gases formed during tyre rectification are discharged through the bearing pipe 10 installed in the fixed bottom 12. The tyre container 9 is provided with ribs 17 on the outside, reinforcing the structure of the rotary reactor 8, in which the tyres are burned. Profiled ribs 17 are attached to the flanges 14 of the bottoms 11, 12 using screws 18.

In the example embodiment of the invention, the horizontal rectification column 6 includes three fraction tank sections: the first fraction tank section 19, the second fraction tank section 20, the third fraction tank section 21 connected using connecting connecting elbows 22. It is possible to provide the horizontal rectification column with more sections. The first fraction tank section 19 has a vapour-gas fraction inlet pipe 23 attached to it, and the third fraction tank section 20 has a vapour-gas fraction outlet pipe 24 attached to it. A barrier (not shown in the figure) is present at the inlet to each of fraction tank sections 19, 20, 21, in which the gas fraction carrier pipe 25 and the vapour-gas buffer 26 are installed. The outlet of the gas fraction carrier pipe 25 is located 1.5 m away from the barrier in which it is installed. The vapour-gas buffer 26 is provided as a pipe closed at its end, provided with slits at the end, ensuring an outlet of vapourised gas passing to the next section and to the vapour-gas fraction outlet pipe 24 in the case of the third fraction tank section 20. The third fraction tank section 20 is provided with a manometer 27 using to control the gas vapour pressure. In the case of embodiments with rectification columns with a number of fraction tank sections higher than three, the manometer 27 is located in the highest fraction tank section. In the example embodiment of the invention, tyre heating is stopped once pressure exceeds 500 hPa. The horizontal rectification column 6 is provided with a liquid fraction tank 28 at the bottom, collecting the liquid fraction flowing from individual fraction tank sections 19, 20, 21 through ball valve not presented in this figure, via liquid fraction discharge pipes 29. A flow sensor 30 is installed inside the liquid fraction discharge pipe 29 connecting the first fraction tank section 19 with the liquid fraction tank 28, providing the operators with information about flow of the liquid fraction. The liquid fraction tank 28 is provided with a floater 31 which switches a pump (not shown in the figure) on when the liquid fraction tank 28 is full in order to collect the liquid present in the liquid fraction tank 28 via the discharge pipe 32.

The vapour-gas fraction outlet pipe 24 is connected to the gas tank with filters 6 containing a gas tank 33, a pre-filter 34 and a main cleaning filter 35.

The procedure used with the embodiment of the invention is as follows: Tyres to be recycled are placed in tyre containers 9 of rotary reactors 8 through the opened loading bottom 11. The rotary reactor 8 containing tyres is placed in hearths 5 of each unit 1, 2, 3 placed in separate container structures 4 of the W20 type, such that thermometer 16 is located outside the hearth 5. A carriage (not shown in the figure) is used for this purpose. The end of the carriage pipe 10 installed in the fixed bottom 12 is placed in the vapour-gas fraction inlet pipe 24 in each unit 1, 2, 3. Small rubber waste or tyres cut into pieces may be placed inside the rotary reactor 8 together with entire tyres. Each of the hearths 5 is surrounded by a thermal shield 36 and is provided with burners 37 at the bottom and a chimney 38 at the top.

Tyre recycling is initiated by feeding propane-butane gas from cylinder 40 through the bus 39 to burners 37 of the hearth 5 located in the first unit 1, opening the gas valve 41 and igniting the gas. The gas valve 41 is opened such that temperature measured using thermometer 16 inside the rotary reactor 8 placed inside the hearth 5 of the first unit 1 increases over 3 h with a constant temperature increase rate not exceeding 90°C/h and reaches a value in a range between 250°C and 270°C. In the example method, with ambient temperature of 20°C and a constant temperature increase rate of 80°C, 260°C is achieved inside this reactor after 3 h. With ambient temperature of -20°C and a constant temperature increase rate of 90°C, 250°C is achieved inside this reactor after 3 h. Next, the gas valve 41 is opened such that temperature measured using thermometer 16 inside the rotary reactor 8 placed inside the hearth 5 of the first unit 1 increases over 1.5 h with a constant temperature increase rate not exceeding 90°C/h and reaches a value in a range between 350°C and 380°C. The rotary reactor 8 located inside the hearth 5 of the first unit 1 is then heated for another 3 h such that it maintains temperature in the range between 350°C and 380°C. Next, the gas valve 41 used to feed gas from the cylinder 40 is closed, the rotary reactor 8 is removed from the hearth 5 of the first unit 1 and in which the tyres were rectified, and another rotary reactor 8 loaded with tyres is placed in this hearth 5 of the first unit 1. 3 h after the process was initiated in the hearth 5 of the first unit 1, gas received from the first unit 1 via the bus 42 and leaving burners 37 of the hearth 5 located in the second unit 2 is ignited. 3 h after combustion was initiated in the hearth 5 of the second unit 2, gas received from the second unit 2 via the bus 43 and leaving burners 37 of the hearth 5 located in the third unit 3 is ignited. 3 h after combustion was initiated in the hearth 5 of the third unit 3, gas received from the third unit 3 via the bus 44 and leaving burners 37 of the hearth 5 located in the first unit 1 is ignited. Buses 41, 42, 43 are provided with valves omitted in the Figure, used to adjust the amount of gas delivered to the corresponding hearth 5, thus adjusting the gas flame and the temperature.
In an embodiment of rotary reactors containing tyres and possibly rubber waste with a total mass of 1,000 kg, after 7.5 since the start of combustion in hearth 5 of the corresponding unit 1, 2 or 3 the rotary reactor 8 in which tyres have been rectified is removed, and another rotary reactor 8 loaded with tyres is placed in the hearth 5 of the corresponding unit 1, 2 or 3. Time intended for replacement of the rotary reactor 8 is 0.5 h. This means that recycling of tyres placed in the rotary reactor of the corresponding unit 1, 2 or 3 takes place every 8 h. All specified values are related to an example embodiment of the rotary reactor 8 containing tyres with a total mass of 1,000 kg. In the case of embodiments of rotary reactors containing tyres and possibly rubber waste, with a total mass higher than 1,000 kg, the time at which gas leaving units 1, 2 or 3 is adjusted to the time at which the flow sensor 30 installed in the horizontal rectification column 6 of the respective gas feeding unit no longer indicates that the liquid fraction is flowing.

Environment-friendly tyre recycling is a significant advantage of this embodiment. This process takes place inside a tight structure, thus preventing emission of harmful chemical reagents into the environment. Replacement of rotary reactors in individual units enables operation of the installation without the need for a shutdown. Excessive gas may be directed to a power generator enabling lighting to be provided at work-places.

### List of references

- 1 -: first set
- 2 -: second set
- 3 -: third set
- 4 -: container structure
- 5 -: hearth
- 6 -: horizontal rectification column
- 7 -: gas tank with filters
- 8 -: rotary reactor
- 9 -: tyre container
- 10 -: bearing pipe
- 11 -: opened loading bottom
- 12 -: fixed bottom
- 13 -: profiled blade
- 14 -: flange
- 15 -: bearing
- 16 -: thermometer
- 17 -: rib
- 18 -: screw
- 19 -: first fraction tank section
- 20 -: second fraction tank section
- 21 -: third fraction tank section
- 22 -: connecting elbow
- 23 -: vapour-gas fraction inlet pipe
- 24 -: vapour-gas fraction outlet pipe
- 25 -: gas fraction carrier pipe
- 26 -: vapour-gas buffer
- 27 -: manometer
- 28 -: liquid fraction tank
- 29 -: liquid fraction discharge pipe
- 30 -: flow sensor
- 31 -: floater
- 32 -: discharge pipe
- 33 -: gas tank
- 34 -: pre-filter
- 35 -: main cleaning filter
- 36 -: thermal shield
- 37 -: burners
- 38 -: chimney
- 39 -: bus
- 40 -: cylinder
- 41 -: gas valve
- 42 -: bus
- 43 -: bus
- 44 -: bus

## Claims

1. A tyre recycling method, in which tyres are placed in a container and heated, whilst the generated gas is discharged to a gas tank, **characterised in that** the recycling process is taking place in an installation containing three identical units: the first unit (1), the second unit (2), the third unit (3), wherein each of the units is located inside a separate container structure (4) and includes a hearth (5), in which a rotary reactor (8) with recycled tyres, a horizontal rectification column (6) provided with at least three fraction tank sections (19, 20, 21) and with a gas tank with filters (7) are placed; once the recycled tyres and possibly rubber waste with a total mass of at least 1,000 kg are placed in tyre containers (9) of rotary reactors (8) and these are placed in hearts (5) of each of the units (1, 2, 3), gas is fed from a cylinder (40) to burners (37) of the hearth (5) located inside the first unit (1) and the gas is ignited, wherein temperature inside the rotary reactor (8) located inside the hearth (5) of the first unit (1) should increase over the course of 3 h with a constant temperature increase rate not higher than 90°C/h and reach a value in the range between 250°C and 270°C, for the next 1,5 h this temperature should increase at a constant rate not exceeding 90°C/h and reach a value in the range between 350°C and 380°C, the rotary reactor (8) located in the hearth (5) of the first unit (1) is subsequently heated and maintained at a temperature between 350°C and 380°C until the flow sensor (30) located inside the horizontal rectification column (6) of the first unit (1) no longer indicates that liquid fraction is flowing, next the gas valve (41), feeding gas from the cylinder (40) is closed, the rotary reactor (8) of the first unit (1), in which tyres have been rectified, is removed from hearth (5), and another rotary reactor (8) loaded with tyres is then placed inside this hearth (5) of the first unit (1); 3 h after the process was initiated in the hearth (5) of the first unit (1), gas received from the first unit (1) leaving burners (37) of the hearth (5) located in the second unit (2) is ignited; 3 h after combustion is started in the hearth (5) of the second unit (2) gas received from the second unit (2) leaving burners (37) of the hearth (5) located in the third unit (3) is ignited, wherein temperature inside the rotary reactor (8) located in the hearth (5) of the respective unit (1 or 2) should increase over the course of 3 h after gas was ignited in this unit, with a constant temperature increase rate not exceeding 90°C/h and reach a value in the range of 250°C to 270°C, for the next 1,5 h this temperature should increase at a constant rate not exceeding 90°C/h and reach a value in the range of 350°C to 380°C, the rotary reactor (8) located in the hearth (5) of the corresponding unit (1 or 2) is then heated and maintained at a temperature between 350°C and 380°C until the flow sensor (30) located in the horizontal rectification column (6) of the corresponding unit (1 or 2) no longer indicates that liquid fraction is flowing, next the rotary reactor (8), in which tyres have been rectified, is removed and another rotary reactor (8) loaded with tyres is placed into this hearth (5) of the corresponding unit (1 lub 2), and tyre recycling is repeated in the corresponding units (1, 2, 3), wherein gas leaving burners (37) of the hearth (5) located in the corresponding unit (1, 2 or 3) is ignited using flame of previously delivered gas; wherein in the case of recycled tyres and possibly rubber waste with a mass of 1,000 kg placed in tyre containers (9) of rotary reactors (8) placed in hearths (5) of each of the units (1, 2, 3), the rotary reactor (8) in which tyres have been rectified is removed 7,5 h after combustion started in the hearth (4) of the corresponding unit (1, 2 or 3) and another rotary reactor (8) loaded with tyres is placed in the hearth (5) of the corresponding unit (1, 2 or 3), wherein time intended for rotary reactor (8) replacement is 0.5 h, which means that recycling of tyres placed in a rotary reactor (8) of the corresponding unit (1, 2 or 3) begins every 8 h.

## Patentansprüche

1. Verfahren zum Reifenrecycling, bei dem Reifen in einen Tank angeordnet und erwärmt werden und das resultierende Gas in einen Gastank abgeleitet wird, **dadurch gekennzeichnet, dass** das Recycling in einer Anlage durchgeführt wird, die drei identische Sets enthält: einen ersten Set (1), einen zweiten Set (2), einen dritten Set (3), wobei jeder Set in einem separaten Behälterkörper (4) angeordnet ist und einen Ofen (5) enthält, in dem ein Drehreaktor (8) mit recycelten Reifen, eine horizontale mit mindestens drei Abschnitten des Fraktionstanks (19, 20, 21) und einen Gastank mit Filtern (7) ausgestattete Rektifikationssäule (6) angeordnet sind; nach dem Einsetzen der zu recycelnden Reifen und gegebenenfalls Gummiabfälle mit einer Masse von mindestens 1000 kg in die Reifentanks (9) der Drehreaktoren (8) und deren Einsetzen in die Öfen (5) jedes Sets (1, 2, 3) zu den Brennern (37) des in dem ersten Set (1) lokalisierten Ofens (5) Flaschengas (40) zugeführt wird und das Gas gezündet wird, wobei die Temperatur im Inneren des Drehreaktors (8), der sich im Ofen (5) des ersten Sets (1) befindet, für 3 Stunden mit einem konstanten Temperaturanstieg von nicht mehr als 90°C/h ansteigen und den Wert zwischen 250°C und 270°C erreichen soll, für die nächsten 1,5 Stunden diese Temperatur mit einem konstanten Temperaturanstieg von nicht mehr als 90°C/h ansteigen und den Wert zwischen 350°C und 380°C erreichen soll, dann der im Ofen (5) des ersten Sets (1) befindliche Drehreaktor (8) erwärmt und die Temperatur darin von 350°C bis 380°C gehalten wird, bis der in der horizontalen Rektifikationssäule (6) des ersten Sets (1) befindliche Strömungssensor (30) keinen Flüssigfraktionsdurchfluss mehr anzeigt, dann das Gasventil (41), durch das das Flaschengas (40) zugeführt wurde abgesperrt wird, den Drehreaktor (8) des ersten Sets (1) aus dem Ofen (5), in dem die Reifen rektifiziert wurden, entfernt wird, und dann in den Ofen (5) des ersten Sets (1) einen anderen Drehreaktor (8) mit den geladenen Reifen eingesetzt wird; nach 3 Stunden vom Beginn des Prozesses in dem Ofen (5) des ersten Sets (1) das aus dem ersten Set (1) erhaltene Gas, der aus den Brennern (37) des sich in dem zweiten Set (2) befindlichen Ofens (5) austritt, entzündet wird; nach 3 Stunden vom Beginn des Prozesses in dem Ofen (5) des zweitem Sets (2) das aus dem zweitem Set (2) erhaltene Gas, der aus den Brennern (37) des sich in dem dritten Set (3) befindlichen Ofens (5) austritt, entzündet wird; wobei die Temperatur im Inneren des Drehreaktors (8) des entsprechenden Sets (1 oder 2) der sich in dem Ofen (5) befindet für 3 Stunden von dem Zeitpunkt der Zündung des Gases in diesem Set mit einem konstanten Temperaturanstieg von nicht mehr als 90°C/h ansteigen und den Wert im Bereich von 250°C bis 270°C erreichen soll, für die nächsten 1,5 Stunde diese Temperatur mit einem konstanten Temperaturanstieg von nicht mehr als 90°C/h ansteigen und den Wert im Bereich von 350°C bis 380°C erreichen soll, dann der im Ofen (5) des entsprechenden Sets (1 oder 2) befindliche Drehreaktor (8) erwärmt wird und die Temperatur zwischen 350°C und 380°C gehalten wird, bis der in der horizontalen Rektifikationssäule (6) des entsprechenden Sets (1 oder 2) befindliche Strömungssensor (30) keinen Flüssigfraktionsdurchfluss mehr aufweist, wonach der Drehreaktor (8), in dem die Reifen rektifiziert wurden, entfernt wird, dann der nächste Drehreaktor (8) mit den beladenen Reifen in diesen Ofen (5) des entsprechenden Sets (1 oder 2) angeordnet wird und der nachfolgende Reifenrecyclingvorgang in den entsprechenden Sets (1, 2, 3) wiederholt wird, wobei das aus den Brennern (37) des in dem entsprechenden Set (1, 2 oder 3) befindlichen Ofens (5) austretende Gas durch die Flamme des zuvor zugeführten Gases entzündet wird; wobei beim Einsetzen der zu recycelnden Reifen und gegebenenfalls Gummiabfälle mit einem Gewicht von 1000 kg in die Reifentanks (9) der Drehreaktoren (8) und beim ihr Einsetzen 7,5 Stunden nach Beginn der Verbrennung im Ofen (4) des entsprechenden Sets (1, 2 oder 3) in die Öfen (5) jedes Sets (1, 2, 3) der Drehreaktor (8), in dem die Reifen rektifiziert wurden, entfernt wird, und dann in den Ofen (5) des entsprechenden Sets (1, 2 oder 3) einen anderen Drehreaktor (8) mit den geladenen Reifen eingesetzt wird, wobei die Zeit für den Austausch des Drehreaktors (8) 0,5 Stunde beträgt, d.h. alle 8 Stunden das Recycling der in den Drehreaktor (8) des entsprechenden Sets (1, 2 oder 3) eingesetzten Reifen beginnt.

## Revendications

1. Le procédé de recyclage de pneus où les pneus sont mis dans un conteneur et chauffés, et le gaz généré est déchargé au réservoir à gaz, **caractérisé en ce que** le recyclage est réalisé dans une installation contenant trois unités identiques : la première unité (1), la seconde unité (2), la troisième unité (3), et chacune des unités est placée dans une structure de conteneur séparée (4) et comporte un foyer (5) où un réacteur rotatif est placé (8) avec les pneus à recycler, une colonne rectificatrice horizontale (6) équipée d'au moins trois sections de fraction du réservoir (19, 20, 21) et du réservoir à gaz avec filtres (7) ; les pneus à recycler et éventuellement des déchets en caoutchouc, pesant au moins 1000 kg, une fois mis dans les conteneurs de pneus (9) des réacteurs rotatifs (8) et après les avoir mis dans les foyers (5) de chaque unité (1, 2, 3), le gaz du cylindre (40) est amené aux brûleurs (37) du foyer (5) de la première unité (1) et gaz est allumé et la température à l'intérieur du réacteur rotatif (8) placé dans le foyer (5) de la première unité (1) doit augmenter pendant 3 heures avec un taux d'augmentation constant de la température ne dépassant pas 90 °C / h et atteindre une valeur comprise entre 250 °C et 270 °C, pendant 1,5 heure suivante cette température doit augmenter avec un taux d'augmentation constant de la température ne dépassant pas 90 °C / h et atteindre une valeur comprise entre 350 °C et 380 °C, ensuite est chauffé le réacteur rotatif (8) du foyer (5) de la première unité (1) et la température dedans est maintenue de 350 °C à 380 °C jusqu'au moment où un capteur de débit (30) placé dans la colonne rectificatrice horizontale (6) de la première unité (1) n'indique plus le débit de la fraction liquide, ensuite la valve à gaz (41) par laquelle le gaz était déchargé du cylindre (40), est fermée, le réacteur rotatif (8) de la première unité (1) où les pneus ont été recyclés est enlevé du foyer (5), ensuite dans ce foyer (5) de la première unité (1) est mis le réacteur rotatif (8) suivant avec les pneus chargés ; 3 heures après l'initiation du procédé dans le foyer (5) de la première unité (1) le gaz reçu de la première unité (1) échappé des brûleurs (37) du foyer (5) de la seconde unité (2) est allumé; 3 heures après le début de la combustion dans le foyer (5) de la seconde unité (2) le gaz reçu de la seconde unité (2), échappé des brûleurs (37) du foyer (5) de la troisième unité (3) est allumé, et la température à l'intérieur du réacteur rotatif (8) du foyer (5) de l'unité correspondante (1 ou 2) doit augmenter pendant 3 heures jusqu'au moment d'allumer le gaz dans cette unité, avec un taux d'augmentation constant de la température ne dépassant pas 90 °C / h et atteindre une valeur comprise entre 250 °C et 270 °C, pendant 1,5 heure suivante cette température doit augmenter avec un taux d'augmentation constant de la température ne dépassant pas 90 °C / h et atteindre une valeur comprise entre 350 °C et 380 °C, ensuite est chauffé le réacteur rotatif (8) du foyer (5) de l'unité correspondante (1 ou 2) et la température dedans est maintenue de 350 °C à 380 °C jusqu'au moment où le capteur de débit (30) placé dans la colonne rectificatrice horizontale (6) de l'unité correspondante (1 ou 2) n'indique plus le débit de la fraction liquide, après est enlevé le réacteur rotatif (8) où les pneus ont été recyclés, ensuite dans ce foyer (5) de unité correspondante (1 ou 2) est mis le réacteur rotatif (8) suivant avec les pneus chargés et ensuite le recyclage de pneus est répété dans les unités correspondantes (1, 2, 3) et le gaz échappé des brûleurs (37) du foyer (5) de l'unité correspondante (1, 2 ou 3) est allumé de la flamme du gaz amené avant ; et les pneus à recycler et éventuellement des déchets en caoutchouc, pesant au moins 1000 kg, une fois mis dans les conteneurs de pneus (9) des réacteurs rotatifs (8) et après les avoir mis dans les foyers (5) de chaque unité (1, 2, 3) 7,5 heures après l'initiation de la combustion dans le foyer (5) de l'unité correspondante (1, 2 ou 3), le réacteur rotatif (8) où les pneus ont été recyclés est enlevé, ensuite dans le foyer (5) de l'unité correspondante (1, 2 ou 3) est mis le réacteur rotatif (8) suivant avec les pneus chargés et le temps pour remplacer le réacteur rotatif (8) est 0,5 heure ce qui signifie que le procédé de recyclage de pneus mis dans le réacteur rotatif (8) de l'unité correspondante (1, 2 ou 3) commence chaque 8 heures.
